# EUROPEAN PATENT APPLICATION

(11) **EP 4 738 321 A1**
(43) Date of publication of application: **06.05.2026**
(21) Application number: 25211613.2
(22) Date of filing: 28.10.2025
(51) Int. Cl.: G09G 3/00

(54) **CIRCUIT DEVICE AND HEAD-UP DISPLAY**

(30) Priority: 30.10.2024 JP 2024190599
(71) Applicant: Seiko Epson Corporation, Tokyo 160-8801 (JP)
(72) Inventor: AKIBA, Yasutoshi, Suwa-shi, Nagano, 392-8502 (JP)
(74) Representative: MERH-IP Matias Erny Reichl Hoffmann Patentanwälte PartG mbB

(57) **Abstract**

A circuit device includes a buffer memory that stores input image data and a distortion correction circuit that performs distortion correction on an input image. An output image includes a first output-side area projected by a first optical system and a second output-side area projected by a second optical system. The distortion correction circuit converts output-side coordinates into input-side coordinates. When the first output-side area includes the output-side coordinates and the input-side coordinates do not belong to a first input-side area, the distortion correction circuit sets pixel data of output image data at the output-side coordinates to predetermined color data. When the second output-side area includes the output-side coordinates and the input-side coordinates do not belong to a second input-side area, the distortion correction circuit sets the pixel data of the output image data at the output-side coordinates to the predetermined color data.

## Description

The present application is based on, and claims priority from JP Application Serial Number 2024-190599, filed October 30, 2024, the disclosure of which is hereby incorporated by reference herein in its entirety.

### BACKGROUND

### 1. Technical Field

The present disclosure relates to a circuit device, a head-up display, and the like.

### 2. Related Art

JP-A-2017-045312 discloses an image generation apparatus that corrects distortion of an image captured by a wide-angle lens. An image obtained by correcting distortion of the image captured by the wide-angle lens is set as a target image. A semicircular indefinite area with no image formed therein is formed at the periphery edge of the target image. The image generation apparatus sets a rectangular mask area that covers an end portion of the target image with the indefinite area, and fills the mask area with a designated color.

JP-A-2017-045312 is an example of the related art.

When distortion correction is performed on a plurality of areas of an image using a plurality of warp parameters, in distortion correction of a certain area, a failure may occur in display between the areas by referring to images of adjacent areas. Due to the failure, for example, a user may have a feeling of strangeness.

### SUMMARY

An aspect of the present disclosure relates to a circuit device for controlling a display device that projects an image by a first optical system and a second optical system, the circuit device includes a buffer memory that stores input image data that is image data of an input image, and a distortion correction circuit that performs distortion correction on the input image and outputs output image data that is image data of an output image, wherein the output image includes a first output-side area projected by the first optical system and a second output-side area projected by the second optical system among the output image, and the distortion correction circuit converts output-side coordinates of the output image into input-side coordinates of the input image, when the first output-side area includes the output-side coordinates, determines whether the input-side coordinates belong to a first input-side area set to correspond to the first output-side area, when the input-side coordinates do not belong to the first input-side area, sets pixel data of the output image data at the output-side coordinates to predetermined color data, when the second output-side area includes the output-side coordinates, determines whether the input-side coordinates belong to a second input-side area set to correspond to the second output-side area, and when the input-side coordinates do not belong to the second input-side area, sets the pixel data of the output image data at the output-side coordinates to the predetermined color data.

Another aspect of the present disclosure relates to a head-up display including the circuit device described above and a display device that projects the output image using the first optical system and the second optical system.

### BRIEF DESCRIPTION OF THE DRAWINGS

FIG. 1 shows a configuration example of a display device provided in an HUD.
FIG. 2 shows distortion correction in the HUD using a plurality of optical systems.
FIG. 3 shows unnecessary displays.
FIG. 4 shows a first configuration example of the head-up display.
FIG. 5 shows a detailed configuration example of a distortion correction circuit.
FIG. 6 shows an example of areas set by area setting information.
FIG. 7 shows a processing flow example of the distortion correction circuit.
FIG. 8 is an example of a processing flow of area determination, warp processing, and pixel data generation.
FIG. 9 is an example of the processing flow of area determination, warp processing, and pixel data generation.
FIG. 10 shows an example in which display areas are arranged in a vertical direction.
FIG. 11 shows a detailed configuration example of a distortion correction circuit in a second configuration example of the HUD.
FIG. 12 shows a configuration example of a circuit device in a third configuration example of the HUD.
FIG. 13 shows a detailed configuration example of a distortion correction circuit in the third configuration example of the HUD.
FIG. 14 shows an operation of the distortion correction circuit in the third configuration example.

### DESCRIPTION OF EMBODIMENTS

Hereinafter, preferred embodiments of the present disclosure will be described in detail. The following embodiments do not unduly limit the description in "What is Claimed is", and not all of the configurations described in the embodiments are necessarily essential component elements. An example in which a distortion correction method of the present disclosure is applied to a head-up display will be described below. However, the distortion correction method of the present disclosure can be applied to any display system that projects an image by a plurality of optical systems, for example, a projector. Hereinafter, the head-up display may be abbreviated as HUD.

### 1. First Configuration Example

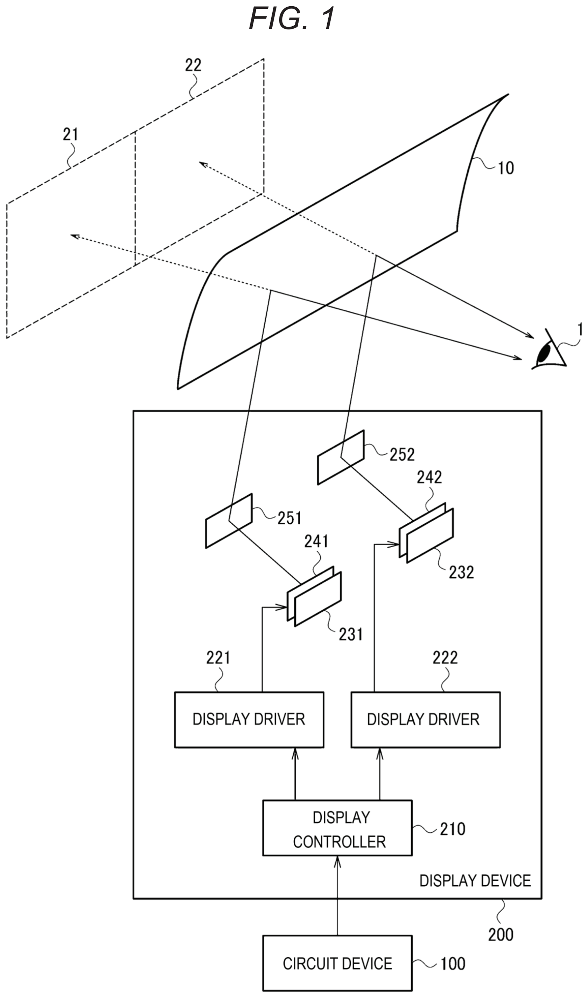

FIG. 1 shows a configuration example of a display device 200 provided in an HUD. The display device 200 includes a display controller 210, display drivers 221 and 222, light sources 231 and 232, liquid crystal display panels 241 and 242, a first mirror 251, and a second mirror 252.

The display controller 210 receives output image data from a circuit device 100 and outputs image data and a timing control signal for the display driver 221 and image data and a timing control signal for the display driver 222. The display driver 221 drives the liquid crystal display panel 241 based on the image data and the timing control signal received from the display controller 210. The display driver 222 drives the liquid crystal display panel 242 based on the image data and the timing control signal received from the display controller 210.

The light source 231 emits a light, the light is transmitted through the liquid crystal display panel 241, and the first mirror 251 projects the transmitted light onto a screen 10. The screen 10 is, for example, a windscreen of a vehicle. The screen 10 reflects a light, and the reflected light enters an eye 1 of a user. Thus, the user can see a first image 21 through the screen 10. Similarly, the light source 232 emits a light, the light is transmitted through the liquid crystal display panel 242, and the second mirror 252 projects the transmitted light onto the screen 10. The second mirror 252 is, for example, a mirror or a lens. The screen 10 reflects a light, and the reflected light enters the eye 1 of a user. Thus, the user can see a second image 22 through the screen 10. An image obtained by combining the first image 21 and the second image 22 is a display image projected by the HUD.

The display image projected by the HUD may be projected by three or more optical systems. For example, when a display image is projected by three mirrors, three sets of a liquid crystal display panel, a light source, and a mirror are provided, and the display image divided into a first image, a second image, and a third image is projected by these sets.

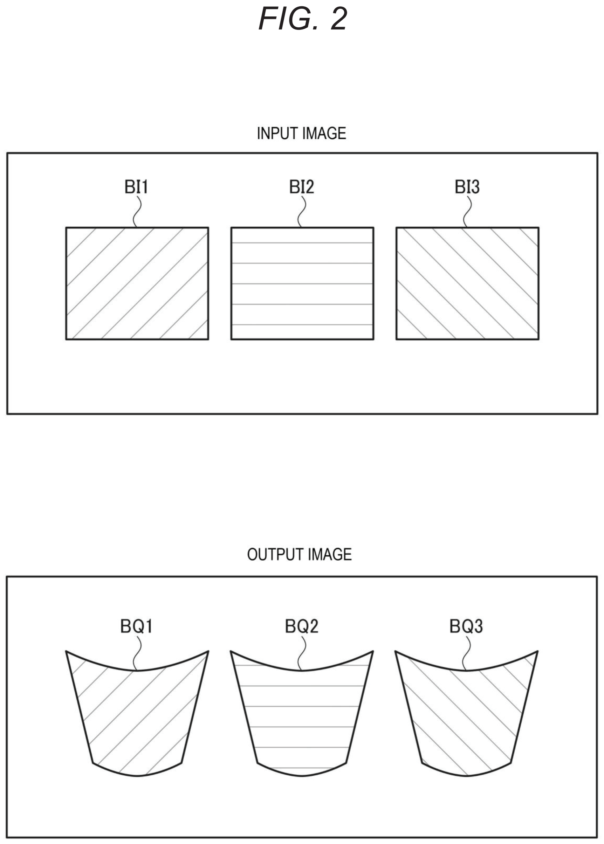

FIG. 2 shows distortion correction in the HUD using a plurality of optical systems. The distortion correction is to apply inverse image distortion to image distortion when an image is projected on a screen of the HUD to the image. As a result, the distortion due to the distortion correction and the distortion due to the projection cancel each other, so that image display with no or reduced distortion is obtained. The image distortion due to projection is image distortion due to a curved surface of a projection surface such as a screen, image distortion due to an optical system, or image distortion including both. Hereinafter, it is assumed that a display image is projected by three mirrors.

An input image to the circuit device 100 includes a first display area Bl1 projected by a first mirror, a second display area BI2 projected by a second mirror, and a third display area BI3 projected by a third mirror. The distortion of the first display area Bl1 of the input image is corrected to a first display area BQ1 of an output image using a first distortion correction table. The first distortion correction table is a table for applying inverse distortion to distortion caused by projection using the first mirror. The distortion of the second display area BI2 of the input image is corrected to a second display area BQ2 of the output image using a second distortion correction table. The second distortion correction table is a table for applying inverse distortion to distortion caused by projection using the second mirror. The distortion of the third display area BI3 of the input image is corrected to a third display area BQ3 of the output image using a third distortion correction table. The third distortion correction table is a table for applying inverse distortion to distortion caused by projection using the third mirror.

The first display area BQ1, the second display area BQ2, and the third display area BQ3 of the output image generated in this manner are projected by the first mirror, the second mirror, and the third mirror, respectively, so that the distortion due to the projection and the distortion due to the distortion correction cancel each other. As a result, a display image without distortion like the input image is visible from the user through the screen 10.

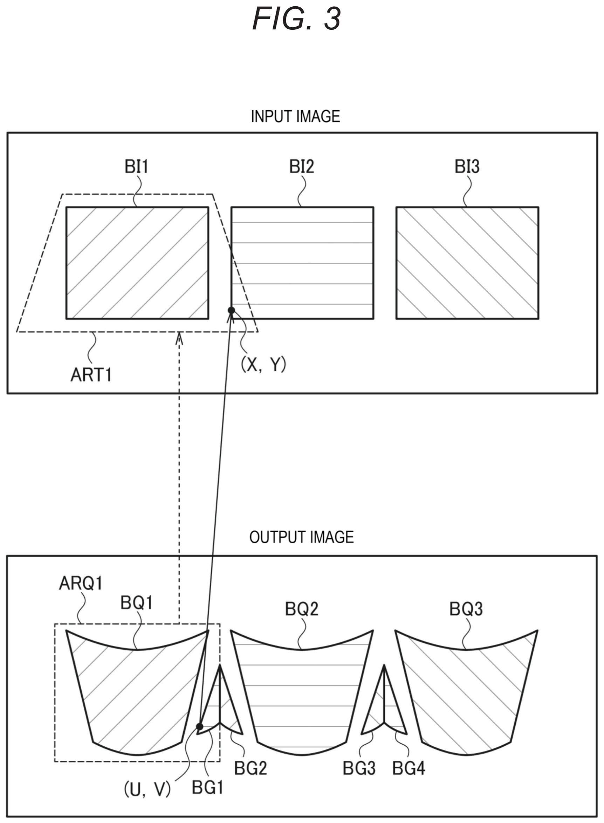

FIG. 2 described above shows an example of a case where ideal distortion correction is performed, but in the HUD using the plurality of mirrors, unnecessary displays as illustrated in FIG. 3 below may occur.

In the distortion correction, when the pixel coordinates of the output image are (U, V), (U, V) is converted into the coordinates (X, Y) of the input image based on the distortion correction table. The pixel data of the coordinates (U, V) of the output image is configured based on the pixel data of the coordinates (X, Y) of the input image. Here, a first output-side area ARQ1 including the first display area BQ1 in the output image is converted into a first conversion area ART1 in the input image by distortion correction. Since the first conversion area ART1 has a shape obtained by performing inverse distortion correction on the first output-side area ARQ1, the first conversion area ART1 includes not only the first display area BI1 of the input image but also a part of the second display area BI2 adjacent thereto. Then, an unnecessary display BG1 caused by referring to the pixel data of the second display area BI2 is generated in the output image.

Similarly, when the second display area BQ2 of the output image is generated in the distortion correction, an unnecessary display BG2 caused by referring to the pixel data of the first display area BI1 and an unnecessary display BG3 caused by referring to the pixel data of the third display area BI3 are generated. When the third display area BQ3 of the output image is generated in the distortion correction, an unnecessary display BG4 is generated by referring to the pixel data of the second display area BI2.

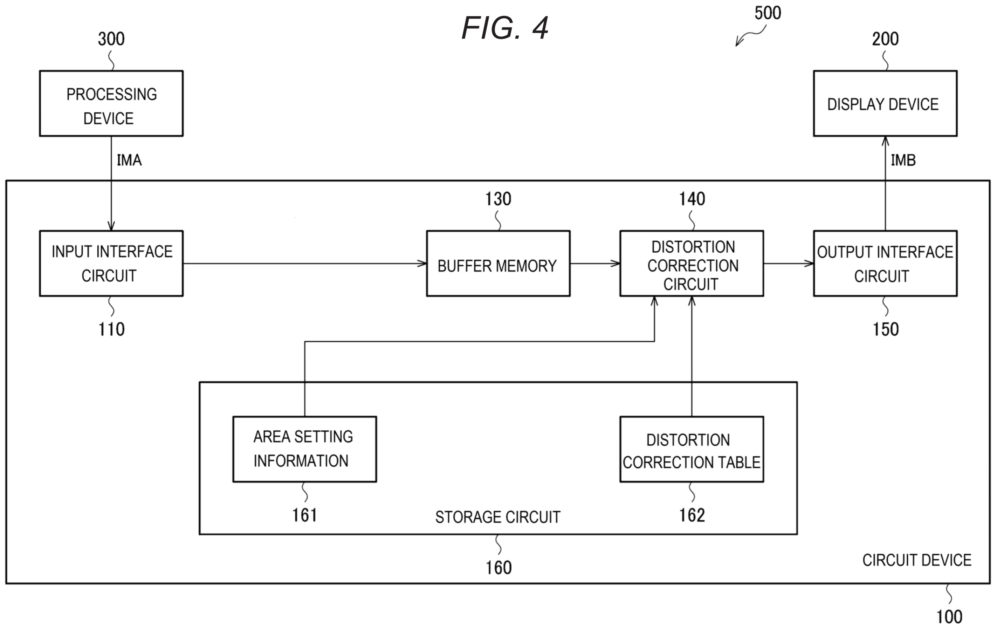

FIG. 4 shows a first configuration example of a head-up display 500 including the circuit device 100 of the present embodiment. The head-up display 500 includes the circuit device 100, the display device 200, and a processing device 300.

The processing device 300 transmits input image data IMA, which is image data of an input image, to the circuit device 100. The processing device 300 is a so-called SoC, and is a processor such as a CPU or a microcomputer. SoC is an abbreviation for System on Chip. CPU is an abbreviation for Central Processing Unit.

The circuit device 100 includes an input interface circuit 110, a buffer memory 130, a distortion correction circuit 140, an output interface circuit 150, and a storage circuit 160. The circuit device 100 is, for example, an integrated circuit device in which a plurality of circuit elements are integrated on a semiconductor substrate.

The input interface circuit 110 receives the input image data IMA from the processing device 300. The input interface circuit 110 may be any one of interface circuits of various image communication standards, and is, for example, a reception circuit such as an LVDS, a DVI, a display port, a GMSL, a GVIF, or the like. LVDS is an abbreviation for low voltage differential signaling, DVI is an abbreviation for digital visual interface, GMSL is an abbreviation for gigabit multimedia serial link, and GVIF is an abbreviation for gigabit video interface.

The storage circuit 160 stores area setting information 161 and a distortion correction table 162. The storage circuit 160 may include a nonvolatile memory such as an EEPROM or an OTP memory, a volatile memory such as an SRAM or a DRAM, or a register such as a flip-flop circuit. The area setting information 161 and the distortion correction table 162 may be stored in different types of storage circuits. For example, the area setting information 161 may be stored in a register, and the distortion correction table 162 may be stored in a volatile memory or a nonvolatile memory. The area setting information 161 may be written in the storage circuit 160 from the processing device 300 via an interface (not illustrated). Alternatively, when the storage circuit 160 is a nonvolatile memory, the area setting information 161 may be written in the storage circuit 160 in advance. The same applies to the distortion correction table 162.

The buffer memory 130 temporarily stores the input image data IMA. The buffer memory 130 may be a line buffer that stores image data of a plurality of scanning lines, or may be a frame memory that stores image data of one frame. The buffer memory 130 is, for example, a volatile memory such as an SRAM or a DRAM.

The distortion correction circuit 140 performs distortion correction on the input image based on the distortion correction table 162, and outputs output image data IMB which is image data of an output image. Here, the distortion correction circuit 140 determines output-side coordinates at which the above-described unnecessary display occurs based on the area setting information 161, and sets pixel data of the coordinates as predetermined color data. The distortion correction table 162 is a table that associates the input-side coordinates (X, Y) of the input image with the output-side coordinates (U, V) of the output image. The distortion correction table 162 is also referred to as a warp parameter. The predetermined color data is color data to be transparent in HUD display, and is, for example, black data.

The output interface circuit 150 transmits the output image data IMB to the display device 200. The output interface circuit 150 may be any one of interface circuits of various image communication standards, and is, for example, a transmission circuit such as an LVDS, a DVI, a display port, a GMSL, or a GVIF.

The distortion correction circuit 140 is a logic circuit. A part or all of the logic circuit may be implemented by a processor such as a DSP. DSP is an abbreviation for digital signal processor. In this case, a program and a command set in which the function of each circuit is described are stored in the memory, and the function of each circuit is implemented by the processor executing the program and the command set.

The display device 200 displays a virtual image in the field of view of the user based on the output image data IMB received from the circuit device 100. An example of the display device 200 is as illustrated in FIG. 1, but is not limited thereto. For example, the circuit device 100 may incorporate the function of the display controller 210. Or, one display driver and one liquid crystal display panel may be provided, and a plurality of mirrors may be provided. In this case, images displayed in a plurality of areas of the liquid crystal display panel are projected by the corresponding mirrors. Or, the optical system used for projection is not limited to a mirror, and may be, for example, a lens. Or, an image display device as an alternative to the liquid crystal display panel and the mirror may be used, and a plurality of the image display devices may be provided. The image display device may include a laser source, a mirror that reflects a laser, and an actuator that drives the mirror for scanning with the laser. Alternatively, the image display device may include a digital mirror device including a laser source, an array of micromirrors, and an actuator that drives each of the micromirrors.

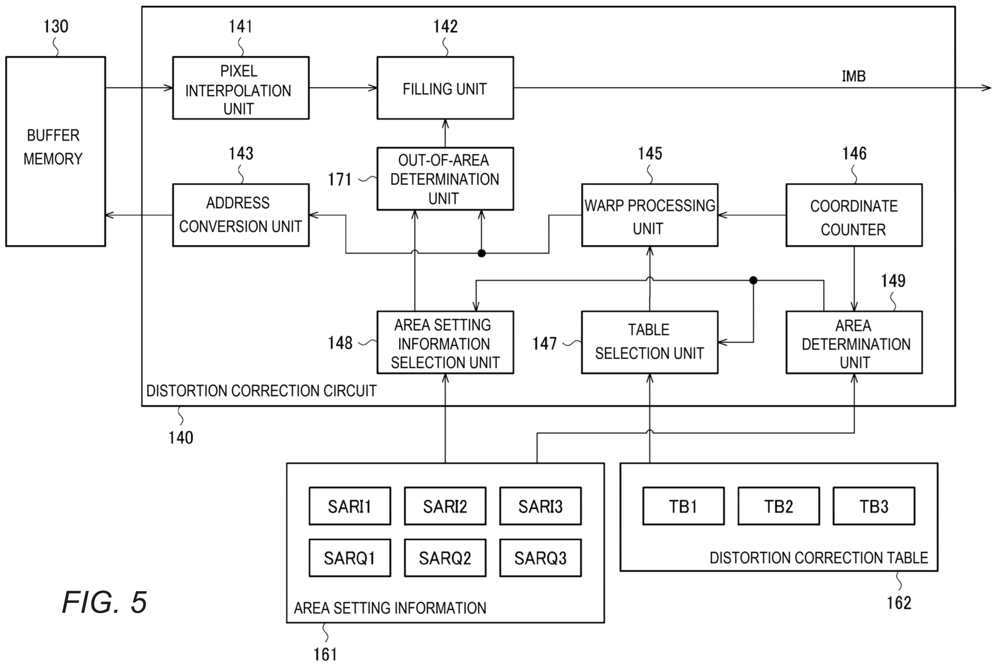

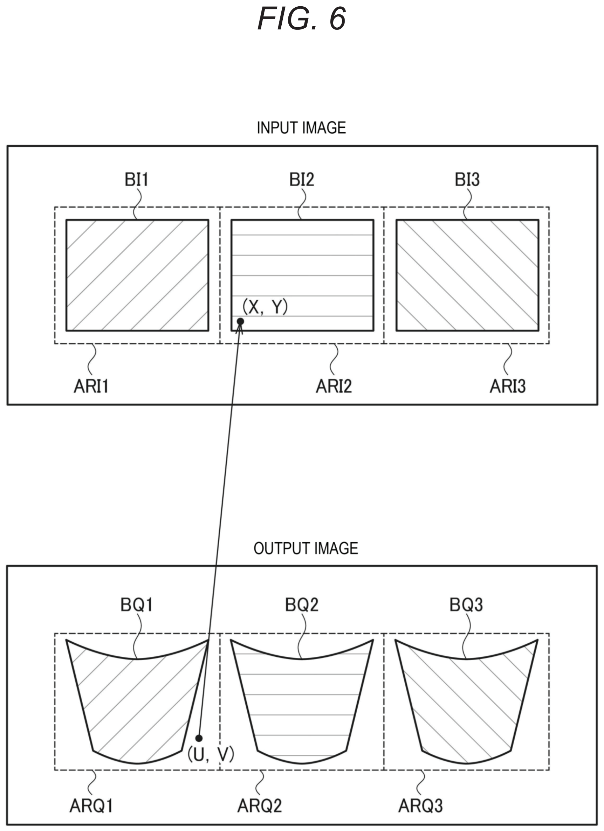

FIG. 5 shows a detailed configuration example of the distortion correction circuit 140. The distortion correction circuit 140 includes a pixel interpolation unit 141, a filling unit 142, an address conversion unit 143, a warp processing unit 145, a coordinate counter 146, an area setting information selection unit 148, a table selection unit 147, an area determination unit 149, and an out-of-area determination unit 171. Hereinafter, the operation of each unit will be described with reference to FIGS. 6 to 9.

FIG. 6 is an example of areas set by the area setting information 161. A first input-side area ARI1, a second input-side area ARI2, and a third input-side area ARI3 are set in the input image. The first input-side area ARI1 includes the first display area BI1 and does not include the second display area BI2 and the third display area BI3. The second input-side area ARI2 includes the second display area BI2 and does not include the first display area BI1 and the third display area BI3. The third input-side area ARI3 includes the third display area BI3 and does not include the first display area Bl1 and the second display area BI2.

A first output-side area ARQ1, a second output-side area ARQ2, and a third output-side area ARQ3 are set in the output image. The first output-side area ARQ1 includes the first display area BQ1 and does not include the second display area BQ2 and the third display area BQ3. The second output-side area ARQ2 includes the second display area BQ2 and does not include the first display area BQ1 and the third display area BQ3. The third output-side area ARQ3 includes the third display area BQ3 and does not include the first display area BQ1 and the second display area BQ2.

Although FIG. 6 illustrates each display area of the input image in a rectangular shape, but each display area may have any shape. Although FIG. 6 illustrates an example in which adjacent display areas are separated from each other in the input image, adjacent display areas may be in contact with each other. Although FIG. 6 illustrates an example in which adjacent input-side areas are in contact with each other, when adjacent display areas are separated from each other, adjacent input-side areas may also be separated from each other. Similarly, adjacent output-side areas may be separated from each other. Although FIG. 6 illustrates an example in which the input-side area is larger than the display area, each input-side area may be the same area as the display area included therein.

As illustrated in FIG. 5, the area setting information 161 includes information SARI1 for setting the first input-side area ARI1, information SARI2 for setting the second input-side area ARI2, and information SARI3 for setting the third input-side area ARI3. The area setting information 161 includes information SARQ1 for setting the first output-side area ARQ1, information SARQ2 for setting the second output-side area ARQ2, and information SARQ3 for setting the third output-side area ARQ3. Each information is information for setting a position and a shape of an area. Each information may be coordinates of all vertices of an area. When the area has a rectangular shape, each information may be the coordinates of the reference position of the rectangle, the width in the horizontal direction, and the width in the vertical direction. The reference position may be any vertex of the rectangle or may be the center point.

The distortion correction table 162 includes a first distortion correction table TB1, a second distortion correction table TB2, and a third distortion correction table TB3. The first distortion correction table TB1 is a table that associates output-side coordinates (U, V) in the first output-side area ARQ1 with input-side coordinates (X, Y) of the input image. The second distortion correction table TB2 is a table that associates output-side coordinates (U, V) in the second output-side area ARQ2 with input-side coordinates (X, Y) of the input image. The third distortion correction table TB3 is a table that associates output-side coordinates (U, V) in the third output-side area ARQ3 with input-side coordinates (X, Y) of the input image.

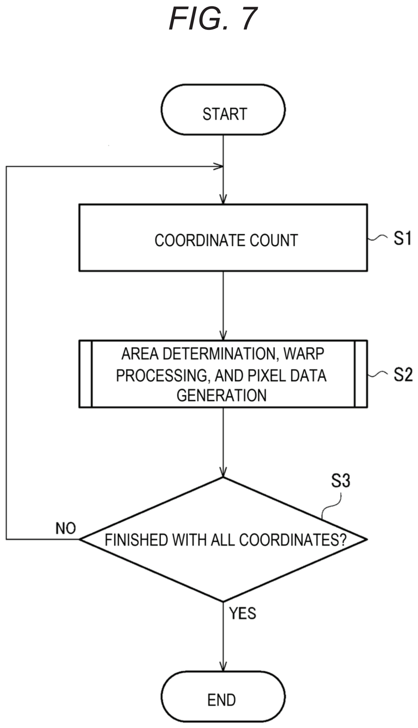

FIG. 7 is a processing flow example of the distortion correction circuit 140.

In step S1, the coordinate counter 146 outputs output-side coordinates (U, V) by coordinate count. Specifically, the coordinate counter 146 outputs (U, V) = (0, 0) at the first pixel of the frame, increments the coordinates every loop from S3, and resets the horizontal coordinate U and the vertical coordinate V when (U, V) reaches the last pixel of the frame. In the increment for each loop, the coordinate counter 146 first increments the horizontal coordinate U, resets U when U reaches the number of horizontal pixels, increments the vertical coordinate V, and repeats this until the last pixel of the frame.

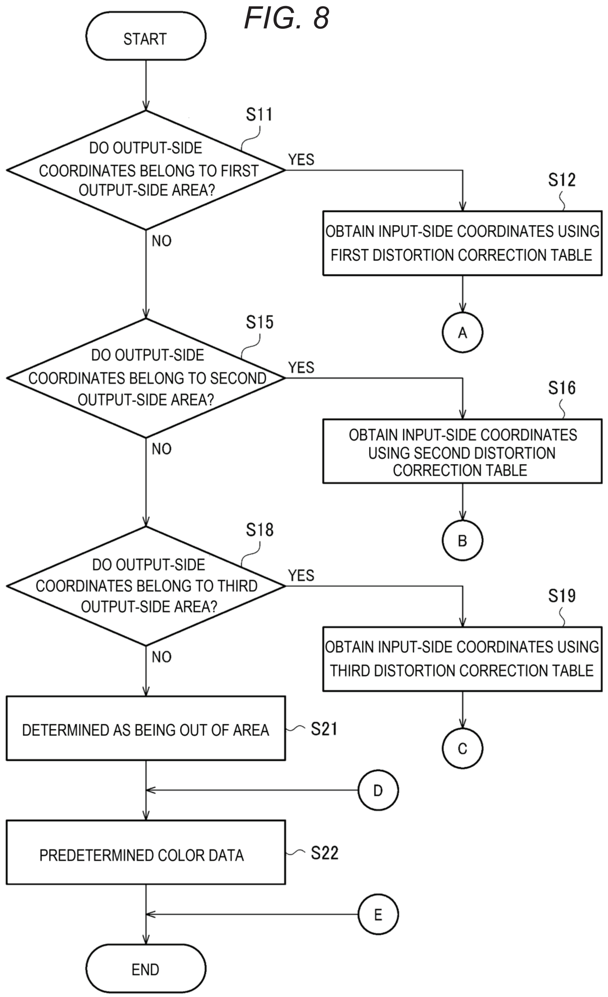

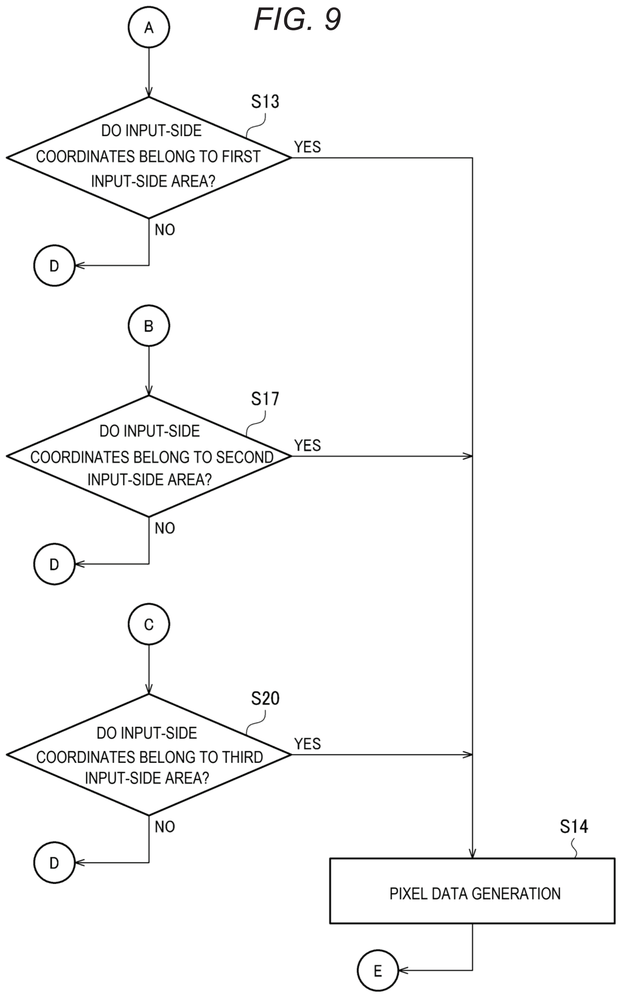

In step S2, the distortion correction circuit 140 performs area determination, warp processing, and pixel data generation. The details thereof will be described with reference to FIGS. 8 and 9.

In step S3, the distortion correction circuit 140 determines whether all the output-side coordinates (U, V) are counted. The distortion correction circuit 140 ends the processing when all the coordinates are counted, and returns to step S1 when not all the coordinates are counted.

FIGS. 8 and 9 show processing flow examples of the area determination, the warp processing, and the pixel data generation in step S2.

In step S11, the area determination unit 149 determines whether the output-side coordinates (U, V) belong to the first output-side area ARQ1 based on the setting information SARQ1 of the first output-side area ARQ1.

When it is determined in step S11 that the output-side coordinates (U, V) belong to the first output-side area ARQ1, the table selection unit 147 selects the first distortion correction table TB1 in step S12. The warp processing unit 145 converts the output-side coordinates (U, V) into input-side coordinates (X, Y) with reference to the selected first distortion correction table TB1.

In step S13, the area setting information selection unit 148 selects the setting information SARI1 of the first input-side area ARI1 based on the information determined as the first output-side area ARQ1 by the area determination unit 149. The out-of-area determination unit 171 determines whether the input-side coordinates (X, Y) belong to the first input-side area ARI1 based on the setting information SARI1.

When it is determined in step S13 that the input-side coordinates (X, Y) belong to the first input-side area ARI1, the distortion correction circuit 140 generates pixel data of the output-side coordinates (U, V) in step S14. The address conversion unit 143 converts the input-side coordinates (X, Y) into an address of the buffer memory 130. Specifically, the address conversion unit 143 outputs an address that designates a plurality of pixels around (X, Y) in the input image. The pixel interpolation unit 141 reads pixel data of the plurality of pixels from the address of the buffer memory 130 and performs pixel interpolation using the pixel data to generate pixel data of (U, V) of the output image.

When it is determined in step S13 that the input-side coordinates (X, Y) do not belong to the first input-side area ARI1, the filling unit 142 sets the pixel data of (U, V) of the output image to predetermined color data in step S22. The predetermined color data is, for example, black data.

When it is determined in step S11 that the output-side coordinates (U, V) do not belong to the first output-side area ARQ1, in step S15, the area determination unit 149 determines whether the output-side coordinates (U, V) belong to the second output-side area ARQ2 based on the setting information SARQ2 of the second output-side area ARQ2.

When it is determined in step S15 that the output-side coordinates (U, V) belong to the second output-side area ARQ2, the table selection unit 147 selects the second distortion correction table TB2 in step S16. The warp processing unit 145 converts the output-side coordinates (U, V) into input-side coordinates (X, Y) with reference to the selected second distortion correction table TB2.

In step S17, the area setting information selection unit 148 selects the setting information SARI2 of the second input-side area ARI2 based on the information determined as the second output-side area ARQ2 by the area determination unit 149. The out-of-area determination unit 171 determines whether the input-side coordinates (X, Y) belong to the second input-side area ARI2 based on the setting information SARI2.

When it is determined in step S17 that the input-side coordinates (X, Y) belong to the second input-side area ARI2, the distortion correction circuit 140 generates pixel data of the output-side coordinates (U, V) in step S14. When it is determined in step S17 that the input-side coordinates (X, Y) do not belong to the second input-side area ARI2, the filling unit 142 sets the pixel data of (U, V) of the output image to predetermined color data in step S22.

When it is determined in step S15 that the output-side coordinates (U, V) do not belong to the second output-side area ARQ2, in step S18, the area determination unit 149 determines whether the output-side coordinates (U, V) belong to the third output-side area ARQ3 based on the setting information SARQ3 of the third output-side area ARQ3.

When it is determined in step S18 that the output-side coordinates (U, V) belong to the third output-side area ARQ3, the table selection unit 147 selects the third distortion correction table TB3 in step S19. The warp processing unit 145 converts the output-side coordinates (U, V) into input-side coordinates (X, Y) with reference to the selected third distortion correction table TB3.

In step S20, the area setting information selection unit 148 selects the setting information SARI3 of the third input-side area ARI3 based on the information determined as the third output-side area ARQ3 by the area determination unit 149. The out-of-area determination unit 171 determines whether the input-side coordinates (X, Y) belong to the third input-side area ARI3 based on the setting information SARI3.

When it is determined in step S20 that the input-side coordinates (X, Y) belong to the third input-side area ARI3, the distortion correction circuit 140 generates pixel data of the output-side coordinates (U, V) in step S14. When it is determined in step S20 that the input-side coordinates (X, Y) do not belong to the third input-side area ARI3, the filling unit 142 sets the pixel data of (U, V) of the output image to predetermined color data in step S22.

When it is determined in step S18 that the output-side coordinates (U, V) do not belong to the third output-side area ARQ3, the area determination unit 149 determines that the output-side coordinates (U, V) are out of area in step S21. In step S22, the filling unit 142 sets the pixel data of (U, V) of the output image into predetermined color data. Through the processing described above, output image data IMB is configured with the pixel data output by the pixel interpolation unit 141 and the filling unit 142.

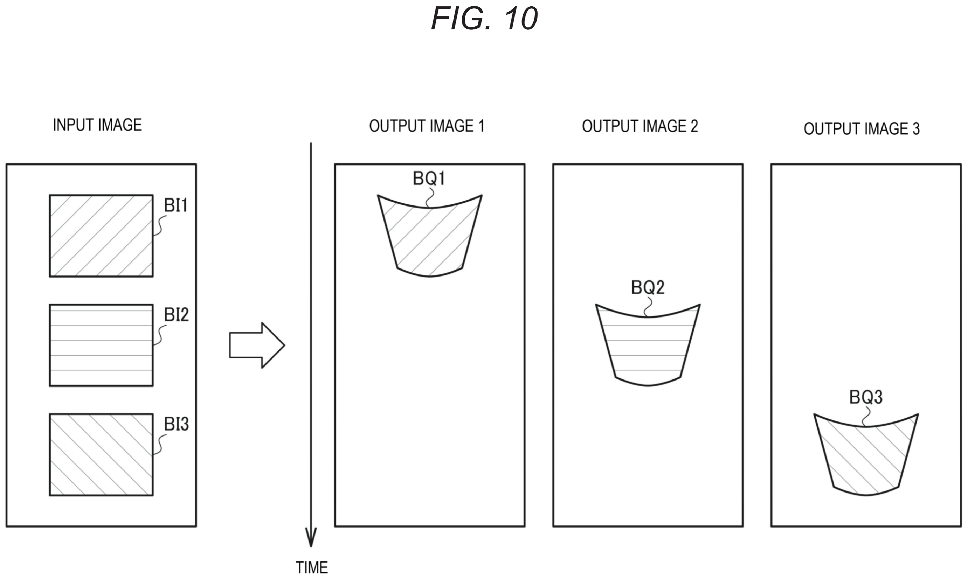

FIG. 10 shows an example in which display areas are arranged in the vertical direction. In the input image, the first display area BI1, the second display area BI2, and the third display area BI3 are arranged in the vertical direction. In the output image, the first display area BQ1, the second display area BQ2, and the third display area BQ3 are displayed in the vertical direction. As a result, when the buffer memory 130 is a line buffer, the memory capacity of the line buffer is saved.

Although such a method may be used, from the viewpoint of synchronization of display timing, it is advantageous to arrange three display areas in the horizontal direction also in the input image as illustrated in FIG. 6. That is, since the display areas are sequentially displayed from the top of the input image, in the output image, the first display area BQ1, the second display area BQ2, and the third display area BQ3 are sequentially displayed, and the display areas are displayed at different times. In contrast, when the three display areas are arranged in the horizontal direction in the input image as shown in FIG. 6, the three display areas are simultaneously displayed in the output image.

In the present embodiment, the circuit device 100 controls the display device 200 that projects an image by a first optical system and a second optical system. The circuit device 100 includes the buffer memory 130 and the distortion correction circuit 140. The buffer memory 130 stores input image data IMA as image data of the input image. The distortion correction circuit 140 performs distortion correction on the input image and outputs output image data IMB as image data of an output image. The output image includes the first output-side area ARQ1 projected by the first optical system and the second output-side area ARQ2 projected by the second optical system. The distortion correction circuit 140 converts the output-side coordinates (U, V) of the output image into the input-side coordinates (X, Y) of the input image. When the first output-side area ARQ1 includes the output-side coordinates (U, V), the distortion correction circuit 140 determines whether the input-side coordinates (X, Y) belong to the first input-side area ARI1 set to correspond to the first output-side area ARQ1. When the input-side coordinates (X, Y) do not belong to the first input-side area ARI1, the distortion correction circuit 140 sets the pixel data of the output image data IMB at the output-side coordinates (U, V) to predetermined color data. When the second output-side area ARQ2 includes the output-side coordinates (U, V), the distortion correction circuit 140 determines whether the input-side coordinates (X, Y) belong to the second input-side area ARI2 set to correspond to the second output-side area ARQ2. When the input-side coordinates (X, Y) do not belong to the second input-side area ARI2, the distortion correction circuit 140 sets the pixel data of the output image data IMB at the output-side coordinates (U, V) to predetermined color data.

As described with reference to FIG. 3, images of a plurality of display areas are projected by a plurality of optical systems. Hereinafter, the first and second display areas will be taken as an example. In the distortion correction, since the output image is generated with reference to the images of the display areas Bl1 and BI2 adjacent to each other in the input image, unnecessary displays BG1 and BG2 may be generated between the display areas BQ1 and BQ2 of the output image. According to the present embodiment, as described with reference to FIG. 6 and the like, normal distortion correction is performed on an area corresponding to the first input-side area ARI1 including the first display area BI1 of the input image in the first output-side area ARQ1 including the first display area BQ1 of the output image. An area not corresponding to the first input-side area ARI1 in the first output-side area ARQ1 is filled with a predetermined color. The same applies to the other output-side areas. As a result, in the distortion correction, since the images of the adjacent display areas in the input image are not referred to, the unnecessary displays BG1 and BG2 are not generated. With an unnecessary display, the user of the display device 200 may have a feeling of strangeness, but according to the present embodiment, display without causing a feeling of strangeness of the user can be provided.

In the example of FIG. 1, the first optical system corresponds to the first mirror 251, and the second optical system corresponds to the second mirror 252. Alternatively, as described above, the image display device may include a laser source and a mirror or a micromirror array and an actuator. In this case, the first optical system may correspond to a first image display device, and the second optical system may correspond to a second image display device.

In the present embodiment, the circuit device 100 may include the storage circuit 160. The storage circuit 160 may store the area setting information 161 for setting the first output-side area ARQ1, the first input-side area ARI1, the second output-side area ARQ2, and the second input-side area ARI2. The distortion correction circuit 140 may determine whether the output-side coordinates (U, V) belong to the first output-side area ARQ1, whether the input-side coordinates (X, Y) belong to the first input-side area ARI1, whether the output-side coordinates (U, V) belong to the second output-side area ARQ2, and whether the input-side coordinates (X, Y) belong to the second input-side area ARI2 based on the area setting information 161.

According to the present embodiment, the input-side area and the output-side area corresponding to the display area projected by each optical system can be set by the area setting information 161. Then, the distortion correction circuit 140 performs area determination based on the area setting information 161, and selects normal distortion correction or filling with predetermined color data according to the determination result, thereby eliminating an unnecessary display.

As is clear from comparison between FIG. 3 and FIG. 6, the first conversion area ART1 obtained by coordinate conversion of the first output-side area ARQ1 to the input side may overlap the first input-side area ARI1 and a part of the second input-side area ARI2. Similarly, the second conversion area obtained by coordinate conversion of the second output-side area ARQ2 to the input side may overlap the second input-side area ARI2 and a part of the first input-side area ARI1.

Since the first conversion area ART1 overlaps a part of the second input-side area ARI2, an unnecessary display BG1 derived from the display of the second input-side area ARI2 is generated in the first output-side area ARQ1. According to the present embodiment, a portion of the first output-side area ARQ1 where the first conversion area ART1 overlaps a part of the second input-side area ARI2 is filled with the predetermined color data. Accordingly, the unnecessary display BG1 is not generated. Similarly, a portion of the second output-side area ARQ2 where the second conversion area overlaps a part of the first input-side area ARI1 is filled with the predetermined color data. Accordingly, the unnecessary display BG2 is not generated.

In the present embodiment, when the first output-side area ARQ1 includes the output-side coordinates (U, V), the distortion correction circuit 140 may select the first distortion correction table TB1 corresponding to the first optical system and convert the output-side coordinates (U, V) into the input-side coordinates (X, Y) using the first distortion correction table TB1. When the second output-side area ARQ2 includes the output-side coordinates (U, V), the distortion correction circuit 140 may select the second distortion correction table TB2 corresponding to the second optical system and convert the output-side coordinates (U, V) into the input-side coordinates (X, Y) using the second distortion correction table TB2.

According to the present embodiment, the distortion correction circuit 140 can recognize the pixel data of the coordinates (X, Y) of the input image referred to for generation of each pixel data of the first output-side area ARQ1 projected by the first optical system. As a result, the distortion correction circuit 140 can set the pixel data into the predetermined color data when the pixel data causing an unnecessary display is referred to.

In the present embodiment, the distortion correction circuit 140 may convert the output-side coordinates (U, V) into the input-side coordinates (X, Y) using the distortion correction table 162. The distortion correction table 162 may be a table that associates the output-side coordinates (U, V) belonging to the first output-side area ARQ1 with the input-side coordinates (X, Y) for distortion correction corresponding to the first optical system, and associates the output-side coordinates (U, V) belonging to the second output-side area ARQ2 with the input-side coordinates (X, Y) for distortion correction corresponding to the second optical system.

According to the present embodiment, the distortion correction circuit 140 can perform distortion correction corresponding to the first optical system and distortion correction corresponding to the second optical system using the distortion correction table 162. In the distortion correction, the above-described unnecessary display may occur, but according to the present embodiment, the unnecessary display does not occur.

In the present embodiment, the first output-side area ARQ1 and the second output-side area ARQ2 may be arranged in the horizontal direction, and the first input-side area ARI1 and the second input-side area ARI2 may be arranged in the horizontal direction.

As described with reference to FIG. 10, when the display areas Bl1 and BI2 are arranged in the vertical direction in the input image although the display areas BQ1 and BQ2 are arranged in the horizontal direction in the output image, the display areas BI1 and BQ2 are not simultaneously displayed in the output image. According to the present embodiment, the output-side area and the input-side area including each display area are both arranged in the horizontal direction. Accordingly, the display areas Bl1 and BQ2 are simultaneously displayed in the output image.

In the present embodiment, the display device 200 may project the output image onto the projection surface using the first optical system and the second optical system. The distortion correction may correct image distortion caused by distortion of the first optical system and the second optical system or distortion of the projection surface.

When the display device 200 projects the output image onto the projection surface using the first optical system and the second optical system, the above-described unnecessary display may occur. According to the present embodiment, the unnecessary display can be eliminated as described above.

In the present embodiment, the predetermined color data may be color data to be transparent when displayed by the display device 200.

According to the present embodiment, an area of the first output-side area ARQ1 not corresponding to the first input-side area ARI1 is filled with a transparent color. The same applies to the other output-side areas. As a result, the portions of the unnecessary displays BG1 and BG2 are filled with the same transparent color as the transparent area without a display object, and the unnecessary display does not occur.

In the present embodiment, the head-up display 500 includes any one of the circuit devices 100 described above and the display device 200 that projects an output image using the first optical system and the second optical system.

### 2. Second Configuration Example

Hereinafter, portions different from the first configuration example will be mainly described, and the description of the same portions as those of the first configuration example will be omitted.

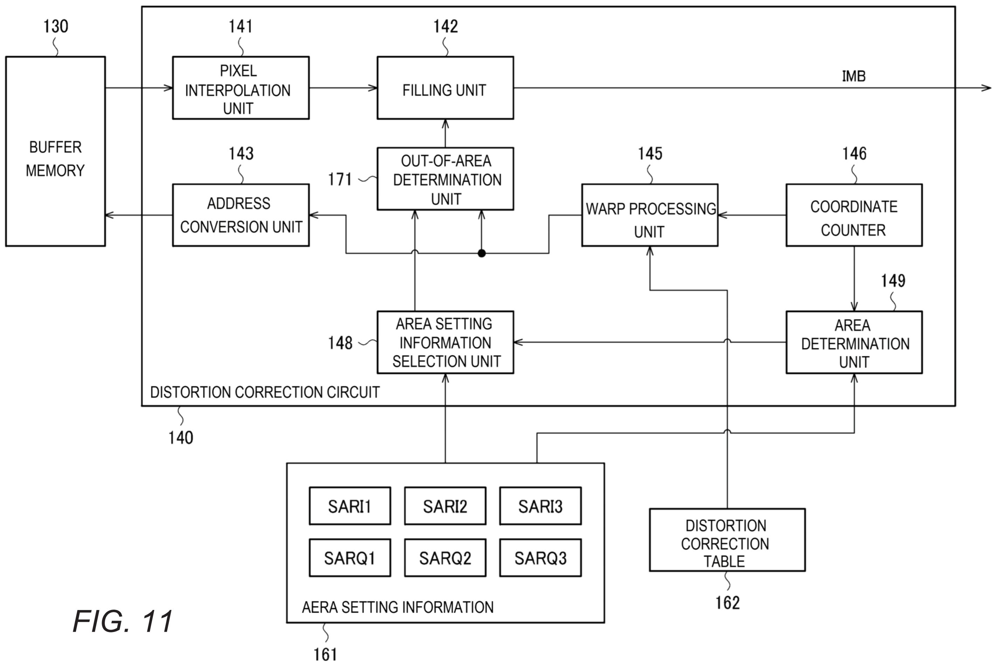

FIG. 11 shows a detailed configuration example of the distortion correction circuit 140 in a second configuration example of the HUD. The distortion correction circuit 140 includes the pixel interpolation unit 141, the filling unit 142, the address conversion unit 143, the warp processing unit 145, the coordinate counter 146, the area setting information selection unit 148, the area determination unit 149, and the out-of-area determination unit 171.

The distortion correction table 162 is one table that associates the output-side coordinates (U, V) belonging to the first output-side area ARQ1, the second output-side area ARQ2, and the third output-side area ARQ3 with the input-side coordinates (X, Y). Specifically, the distortion correction table 162 is obtained by combining the first distortion correction table TB1, the second distortion correction table TB2, and the third distortion correction table TB3 in FIG. 5 into one table. Since the first output-side area ARQ1, the second output-side area ARQ2, and the third output-side area ARQ3 do not overlap one another, the coordinate conversion of the warp processing is uniquely determined even when the tables are integrated into one.

### 3. Third Configuration Example

Hereinafter, portions different from the first configuration example will be mainly described, and the description of the same portions as those of the first configuration example will be omitted. A third configuration example may be combined with the second configuration example.

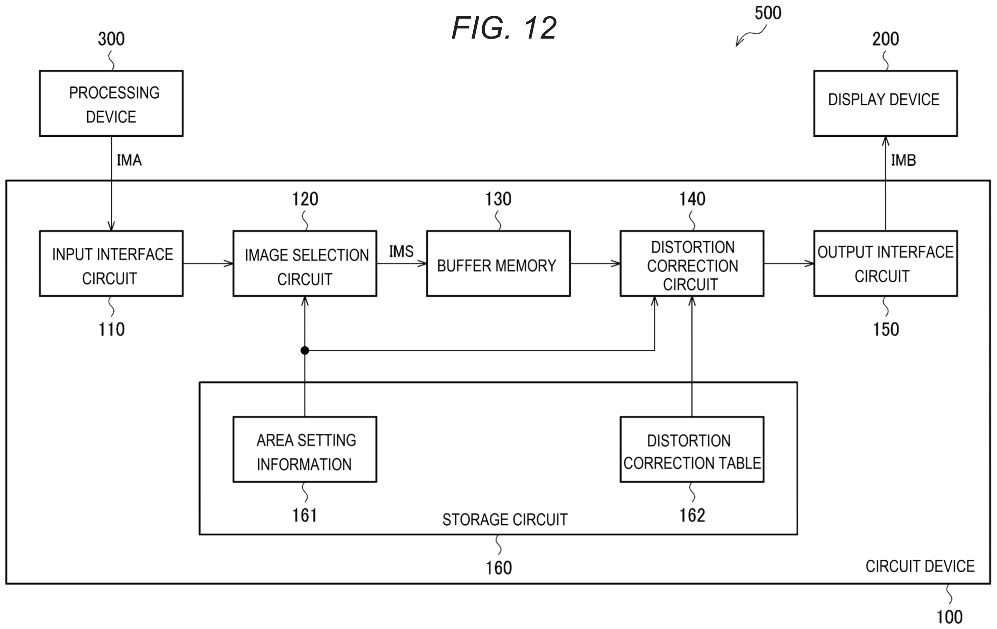

FIG. 12 is a configuration example of the circuit device 100 in the third configuration example of the HUD. The circuit device 100 includes the input interface circuit 110, the image selection circuit 120, the buffer memory 130, the distortion correction circuit 140, the output interface circuit 150, and the storage circuit 160.

The image selection circuit 120 selects selected image data IMS, which is the image data of a selected area, from the input image data IMA based on the area setting information 161. The selected areas are the first input-side area ARI1, the second input-side area ARI2, and the third input-side area ARI3, and are smaller than the entire input image. The image selection circuit 120 writes the selected image data IMS in the buffer memory 130.

The distortion correction circuit 140 generates the output image data IMB of the area corresponding to the selected image in the output image from the selected image data IMS based on the area setting information 161, and sets the output image data IMB of the other areas to the predetermined color data.

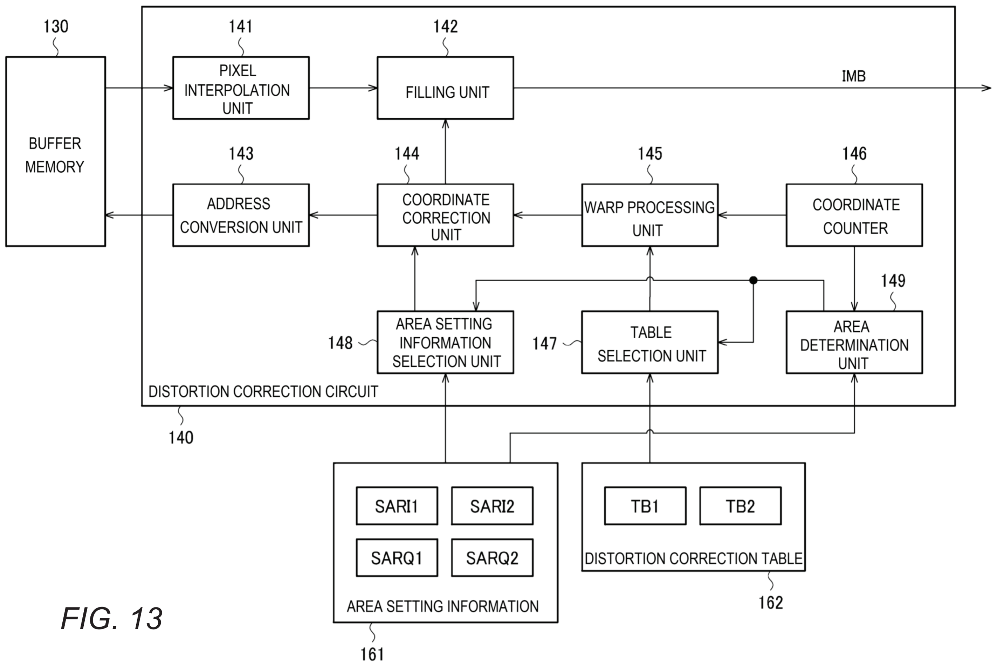

FIG. 13 shows a detailed configuration example of the distortion correction circuit 140 in the third configuration example of the HUD. The distortion correction circuit 140 includes the pixel interpolation unit 141, the filling unit 142, the address conversion unit 143, a coordinate correction unit 144, the warp processing unit 145, the coordinate counter 146, the area setting information selection unit 148, the table selection unit 147, and the area determination unit 149.

Here, it is assumed that the first input-side area ARI1 and the second input-side area ARI2 are set in the input image, and the first output-side area ARQ1 and the second output-side area ARQ2 are set in the output image. The area setting information includes the setting information SARI1, the setting information SARI2, the setting information SARQ1, and the setting information SARQ2. The distortion correction table 162 includes the first distortion correction table TB1 and the second distortion correction table TB2.

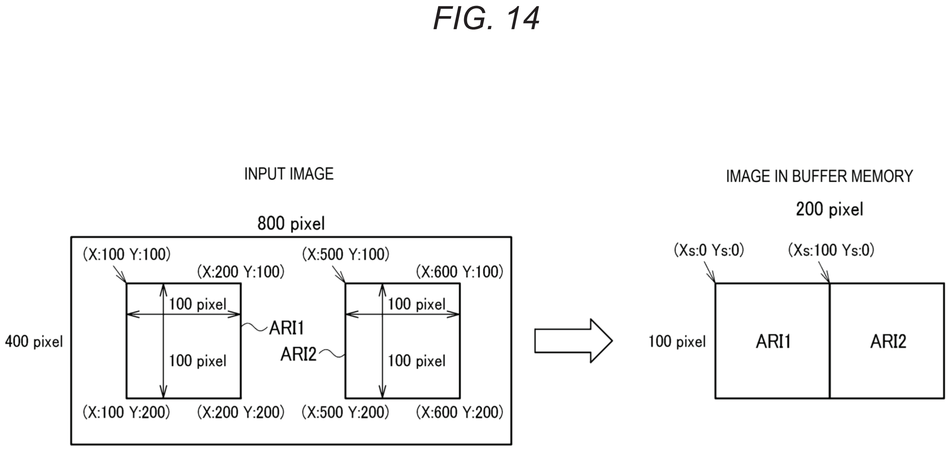

The operation of the distortion correction circuit 140 in the third configuration example will be described with reference to FIG. 14. In FIG. 14, the coordinates (X, Y) = (100, 100) are described as (X: 100 Y: 100).

It is assumed that the number of horizontal pixels of the input image is 800, the number of vertical pixels is 400, and the first input-side area ARI1 and the second input-side area ARI2 are set as selected areas in the input image. The reference point of each area is an upper left vertex. The reference point of the first input-side area ARI1 in the input image is at coordinates (X: 100 Y: 100), the number of horizontal pixels is 100, and the number of vertical pixels is 100. The reference point of the second input-side area ARI2 in the input image is at coordinates (X: 500 Y: 100), the number of horizontal pixels is 100, and the number of vertical pixels is 100.

The number of horizontal pixels of the selected image stored in the buffer memory 130 is 100 + 100 = 200, and the number of vertical pixels is 100. The coordinates in the selected image in the buffer memory 130 are expressed as selected coordinates (Xs, Ys). In the buffer memory 130, the reference point of the first input-side area ARI1 is at coordinates (Xs: 0 Ys: 0), and the reference point of the second input-side area ARI2 is at coordinates (Xs: 100 Ys: 0).

It is assumed that the area determination unit 149 determines that the output-side coordinates (U, V) belong to the first output-side area ARQ1. In this case, the warp processing unit 145 converts the output-side coordinates (U, V) into the input-side coordinates (X, Y) using the first distortion correction table TB1. The coordinate correction unit 144 determines whether the input-side coordinates (X, Y) are within a range from (X: 100 Y: 100) to (X: 200 Y: 200), that is, whether the input-side coordinates (X, Y) belong to the first input-side area ARI1.

When determining that the input-side coordinates (X, Y) belong to the first input-side area ARI1, the coordinate correction unit 144 sets the selected coordinates to (Xs, Ys) = (X-100, Y-100). That is, the coordinate correction unit 144 shifts the reference point (X: 100 Y: 100) of the first input-side area ARI1 to (Xs: 0 Ys: 0). The address conversion unit 143 converts (Xs, Ys) into an address of the buffer memory 130. The pixel interpolation unit 141 generates pixel data of (U, V) of the output image by performing pixel interpolation using the pixel data read from the address of the buffer memory 130.

When the coordinate correction unit 144 determines that the input-side coordinates (X, Y) do not belong to the first input-side area ARI1, the filling unit 142 sets the pixel data of (U, V) of the output image to predetermined color data.

It is assumed that the area determination unit 149 determines that the output-side coordinates (U, V) belong to the second output-side area ARQ2. In this case, the warp processing unit 145 converts the output-side coordinates (U, V) into the input-side coordinates (X, Y) using the second distortion correction table TB2. The coordinate correction unit 144 determines whether the input-side coordinates (X, Y) are within a range from (X: 500 Y: 100) to (X: 600 Y: 200), that is, whether the input-side coordinates (X, Y) belong to the second input-side area ARI2.

When determining that the input-side coordinates (X, Y) belong to the second input-side area ARI2, the coordinate correction unit 144 obtains coordinates (Xs', Ys') = (X-500, Y-100). Thereafter, the coordinate correcting unit 144 sets the selected coordinates to (Xs, Ys) = (Xs'+100, Ys'+0). That is, the coordinate correction unit 144 temporarily shifts the reference point of the second input-side area ARI2 from (X: 500 Y: 100) to (Xs': 0 Ys': 0), and further shifts the reference point to (Xs: 100 Ys: 0). The address conversion unit 143 converts (Xs, Ys) into an address of the buffer memory 130. The pixel interpolation unit 141 generates pixel data of (U, V) of the output image by performing pixel interpolation using the pixel data read from the address of the buffer memory 130.

When the coordinate correction unit 144 determines that the input-side coordinates (X, Y) do not belong to the second input-side area ARI2, the filling unit 142 sets the pixel data of (U, V) of the output image to predetermined color data.

In the present embodiment, the circuit device 100 includes an image selection circuit 120. The image selection circuit 120 selects the image data of the first input-side area ARI1 and the image data of the second input-side area ARI2 from the input image data IMA and stores the selected image data in the buffer memory 130.

According to the present embodiment, the image data of the first input-side area ARI1 and the second input-side area ARI2 smaller than the input image is stored in the buffer memory 130. As a result, the buffer size in distortion correction is smaller than that when the input image is directly buffered. Thus, the chip size of the circuit device 100 is reduced, or the cost of the circuit device 100 is reduced.

While the present embodiment has been described in detail above, a person skilled in the art could readily understand that many modifications can be made without substantially departing from the novel matters and effects of the present disclosure. Therefore, all such modifications are within the scope of the present disclosure. For example, a term described at least once together with a different term having a broader meaning or the same meaning in the specification or the drawings can be replaced with the different term in any part in the specification or the drawings. All combinations of the present embodiment and the modifications are also within the scope of the present disclosure. The configurations, operations, and the like of the input interface circuit, the image selection circuit, the buffer memory, the distortion correction circuit, the output interface circuit, the storage circuit, the circuit device, the processing device, the display device, the head-up display, and the like are not limited to those described in the present embodiment, and various modifications can be made.

## Claims

1. A circuit device for controlling a display device that projects an image by a first optical system and a second optical system, the circuit device comprising:
a buffer memory that stores input image data that is image data of an input image; and
a distortion correction circuit that performs distortion correction on the input image and outputs output image data that is image data of an output image, wherein
the output image includes a first output-side area projected by the first optical system and a second output-side area projected by the second optical system, and
the distortion correction circuit converts output-side coordinates of the output image into input-side coordinates of the input image, when the first output-side area includes the output-side coordinates, determines whether the input-side coordinates belong to a first input-side area set to correspond to the first output-side area, when the input-side coordinates do not belong to the first input-side area, sets pixel data of the output image data at the output-side coordinates to predetermined color data, when the second output-side area includes the output-side coordinates, determines whether the input-side coordinates belong to a second input-side area set to correspond to the second output-side area, and when the input-side coordinates do not belong to the second input-side area, sets the pixel data of the output image data at the output-side coordinates to the predetermined color data.

2. The circuit device according to claim 1, further comprising a storage circuit that stores area setting information for setting the first output-side area, the first input-side area, the second output-side area, and the second input-side area, wherein
the distortion correction circuit determines whether the output-side coordinates belong to the first output-side area, whether the input-side coordinates belong to the first input-side area, whether the output-side coordinates belong to the second output-side area, and whether the input-side coordinates belong to the second input-side area based on the area setting information.

3. The circuit device according to claim 1, wherein
a first conversion area obtained by coordinate conversion of the first output-side area to the input side overlaps the first input-side area and a part of the second input-side area, and
a second conversion area obtained by coordinate conversion of the second output-side area to the input side overlaps the second input-side area and a part of the first input-side area.

4. The circuit device according to claim 1, wherein
the distortion correction circuit selects a first distortion correction table corresponding to the first optical system and converts the output-side coordinates into the input-side coordinates using the first distortion correction table when the first output-side area includes the output-side coordinates, and selects a second distortion correction table corresponding to the second optical system and converts the output-side coordinates into the input-side coordinates using the second distortion correction table when the second output-side area includes the output-side coordinates.

5. The circuit device according to claim 1, wherein
the distortion correction circuit converts the output-side coordinates into the input-side coordinates using a distortion correction table, and
the distortion correction table is a table that associates the output-side coordinates belonging to the first output-side area with the input-side coordinates for distortion correction corresponding to the first optical system, and associates the output-side coordinates belonging to the second output-side area with the input-side coordinates for distortion correction corresponding to the second optical system.

6. The circuit device according to claim 1, comprising an image selection circuit that selects image data of the first input-side area and image data of the second input-side area from the input image data and stores the selected image data in the buffer memory.

7. The circuit device according to claim 1, wherein
the first output-side area and the second output-side area are arranged in a horizontal direction, and the first input-side area and the second input-side area are arranged in the horizontal direction.

8. The circuit device according to claim 1, wherein
the display device projects the output image onto a projection surface using the first optical system and the second optical system, and
the distortion correction corrects distortion of the first optical system and the second optical system or image distortion caused by distortion of the projection surface.

9. The circuit device according to claim 1, wherein
the predetermined color data is color data to be transparent when displayed by the display device.

10. A head-up display comprising:
the circuit device according to claim 1; and
the display device that projects the output image using the first optical system and the second optical system.
